Europäisches Patentamt

European Patent Office

Office européen des brevets

(11) Publication number: **0 199 431**
**A2**

# (12) EUROPEAN PATENT APPLICATION

(21) Application number: **86301184.7**

(22) Date of filing: **20.02.86**

(51) Int. Cl.⁴: **G 01 L 3/24**
**G 01 L 5/26**

A request for correction of errors in pages 6 to 13 of the description has been filed pursuant to Rule 88 EPC.

(30) Priority: **22.02.85 US 704381**

(43) Date of publication of application:
**29.10.86 Bulletin 86/44**

(84) Designated Contracting States:
**AT BE CH DE FR GB IT LI LU NL SE**

(71) Applicant: **WAYNE STATE UNIVERSITY**
**100 Antoinette**
**Detroit Michigan 48202(US)**

(72) Inventor: **Rezaka, Sohair F.**
**13 Hassan Amin**
**Elsarai Alexandria(EG)**

(72) Inventor: **Henein, Naeim A.**
**785 Lake Shore Drive**
**Grosse Pointe Shores Michigan 48076(US)**

(74) Representative: **Jones, Michael Raymond et al,**
**HASELTINE LAKE & CO. Hazlitt House 28 Southampton**
**Buildings Chancery Lane**
**London WC2A 1AT(GB)**

(54) **Instantaneous friction indicator for reciprocating internal combustion engines and method for calculating instantaneous friction.**

(57) An apparatus and method for calculating the total instantaneous frictional torque in an operating internal combustion engine. The apparatus includes a central processing unit which receives inputs from a first sensor which measures the angular velocity of the engine and a second sensor which measures the gas pressure within a cylinder of the engine. The central processing unit executes a stored program which operates on the outputs from the first and second sensors, the known instantaneous inertia torques of the rotating and reciprocating masses of the engine and the instantaneous torque of the load attached to the engine and generates an output to an indicator, to provide an indication of the total instantaneous frictional torque of the engine.

FIG-1

EP 0 199 431 A2

## INSTANTANEOUS FRICTION INDICATOR FOR RECIPROCATING INTERNAL COMBUSTION ENGINES AND METHOD FOR CALCULATING INSTANTANEOUS FRICTION

### BACKGROUND OF THE INVENTION

Field of the Invention:

This invention relates, in general, to engine testing apparatus and methods for determining the operating characteristics of an engine and, more specifically, to apparatus and methods for determining the total instantaneous friction in a reciprocating internal combustion engine.

Description of the Prior Art:

In an internal combustion engine, such as a gasoline or diesel or other fuel powered, reciprocating, internal combustion engine, friction between the various reciprocating and rotating components of the engine as well as various accessories mounted on the engine must be minimized if the engine is to run efficiently and at maximum power/fuel usage levels. Engine friction is present in the reciprocating and rotating components of an engine, such as the assembly valve train, auxiliary accessories and bearings. All of these components contribute to a total friction loss which detracts from the work output of the engine and causes wear on the engine components over long term use.

Such frictional losses are also subtracted directly from the net work done by the gases on the pistons during the thermodynamic engine cycle. Accordingly, any reduction in such

0199431

frictional losses results in a direct gain in the brake thermal efficiency of the engine.

Many different techniques have been used to measure the power, torque or mean effective pressure required to overcome the total frictional losses within a reciprocating internal combustion engine. All of these approaches, however, provide different degrees of accuracy and all provide mean average values over the entire engine cycle or an indication of the overall frictional losses without any reflection on the instantaneous friction at any instant during the engine cycle. The engine in the total instantaneous friction torque cannot be determined by such previously devised methods. An indication of the total instantaneous friction torque of the engine would be beneficial to an engine designer as the designer could devote his efforts to reducing friction in those areas which would be most effective in improving the fuel economy of the engine.

Thus, it would be desirable to provide an apparatus and method for measuring the total instantaneous friction torque caused by the various components in the reciprocating internal combustion engine. It would also be desirable to provide an apparatus and method for measuring the total instantaneous frictional torque which is useful as a design tool to minimize the frictional losses caused by the various moving parts of a reciprocating internal combustion engine.

0199431

## SUMMARY OF THE INVENTION

The present invention is an apparatus and method for measuring the total instantaneous friction torque in reciprocating internal combustion engines.

The apparatus includes a central processing unit which receives inputs from two sensors mounted on a reciprocating internal combustion engine. The first sensor is mounted in close association with a rotating component of the engine such as the flywheel, crankshaft, and/or camshaft. The first sensor generates an electrical signal upon the start of one period of rotation of the engine and a second signal which indicates completion of a pre-determined period of rotation of the engine. A time signal is generated which corresponds to the time required for the engine to rotate through a pre-determined amount of angular rotation. In a preferred embodiment, the first sensor is mounted adjacent to the flywheel of the engine and detects the amount of time required for the engine to rotate between successive gear teeth on the flywheel.

The second sensor is also mounted on the engine and provides an output signal corresponding to the gas pressure within the cylinder(s) of the engine. The output from both of the first and second sensors, after suitable signal processing, are input to the central processor which stores the measured values in a memory.

A second stored program is also executed by the central processing unit to calculate the total instantaneous friction of the engine during the timed cycle. The second
stored program executes and solves the equation:

$$T_F = T_G - T_{IN(rec)} - T_{IN(rot)} - T_L$$

which computes the instantaneous gas torque $T_G$ at different
crank angle degrees from the gas pressure, piston area, crank
radius and length of the connecting rods of the engine. The
reciprocating and rotating inertia torques are computed from the
corresponding masses and the instantaneous acceleration of these
masses. The instantaneous acceleration of these masses is
calculated from the measured instantaneous angular velocity of
the crank shaft. The load instantaneous torque due to the load
on the engine can also be obtained from the characteristics of
the load or can be measured by a torque meter mounted between
the flywheel and the load, the torque due to the load is equal
to zero when the engine is idling. Solution of this equation
generates output data which provides a direct indication of the
total instantaneous frictional torque of the engine. Since it
is known that various components generate greater frictional
losses at certain times during the crank cycle of the engine,
the shape and/or values of the total instantaneous friction
torque provide extremely useful data to an engine designer and
enables the designer to devote his efforts to reducing friction
and its resulting losses in those areas which contribute most to
the total frictional losses within an engine. Also, the total
instantaneous friction torque can be a very effective tool to
the lubrication engineer or scientist in developing lubricating
oils and additives which reduce engine friction.

## BRIEF DESCRIPTION OF THE DRAWING

The various features, advantages and other uses of the
present invention will become more apparent by referring to the
following detailed description and drawing in which:

Figure 1 is a block diagram of the instantaneous friction indicator apparatus of the present invention;

Figure 2 is a circuit diagram of the signal conditioning circuitry shown in Figure 1;

Figure 3 is a flow chart illustrating the operation of one portion of the stored program in the central processing unit of the apparatus of the present invention; and

Figure 4 is a graph illustrating the output from the friction indicating apparatus of the present invention.

DESCRIPTION OF THE PREFERRED EMBODIMENTS

Throughout the following description and drawing, an identical reference number is used to refer to the same component shown in multiple figures of the drawing.

The present invention is an apparatus and method for calculating the total instantaneous frictional torque of an operating, reciprocating internal combustion engine. The apparatus and method of the present invention is useful as a research and design tool in that it enables a designer to obtain a quantitative indication of the instantaneous friction torque at all instances during the cycle of a reciprocating internal combustion engine. When such total instantaneous frictional torques have been determined, the engine designer or lubrication engineer can direct his efforts to those areas or components which contribute most to reduced engine efficiency thereby resulting in a more efficient engine design or a better lubricating oil or oil additive.

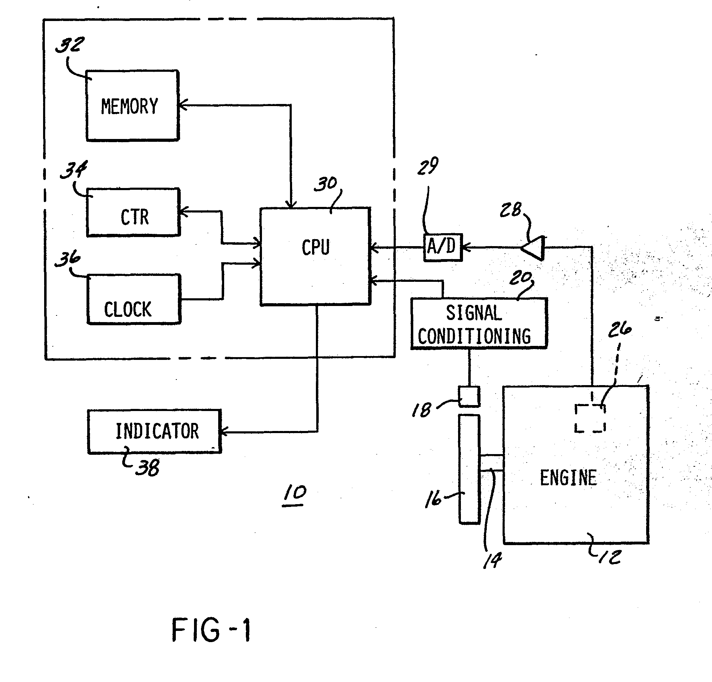

Referring now to Figure 1, there is illustrated an apparatus 10 for calculating the total instantaneous frictional torque of an operating, reciprocating internal combustion engine. The apparatus 10 is usable with any reciprocating, internal combustion engine 12, such as those powered by gasoline or diesel fuels or any other liquid, solid or gaseous fuel. The engine 12 may be either single or multiple cylinder constructed of a four-stroke-cycle or two-stroke-cycle type. As is conventional, such internal combustion engines include a rotating member such as a crank shaft 14 which rotates a predetermined number of rotations per engine cycle. In addition to the crank shaft 14, other rotatable components of the engine 12 may include a cam shaft, not shown, and a flywheel 16 mounted on the end of the crank shaft 14.

The apparatus 10 of the present invention includes means 18 for measuring the instantaneous angular velocity of the engine 12.

The measuring means 18 preferably is a sensor which is mounted on the engine 12 in close proximity to one of the rotating components of the engine 12, such as the flywheel 16, the crankshaft 14 or the camshaft. As illustrated in Figure 1, by way of example only, the sensor 18 is mounted in close proximity with the flywheel 16 and detects the passage of each gear tooth of the flywheel ring gear as the flywheel 16 rotates past the sensor 18. Alternately, the sensor 18 could be mounted on or adjacent to the crankshaft 14 or the camshaft to detect pre-determined amounts of angular rotation of these components of the engine 12.

In one embodiment, the sensor 18 may be a magnetic pick-up or a photo-electric cell which is mounted on the engine 12 adjacent to the flywheel 16. The sensor 18 detects the passage of each gear tooth of the flywheel ring gear therepast and generates a signal as each gear tooth passes the pick-up 18. Alternately, in place of a magnetic pick-up or photo-cell the sensor 18 may be an encoder which generates an output signal upon the occurrence of a pre-determined amount of angular rotation of the engine 12.

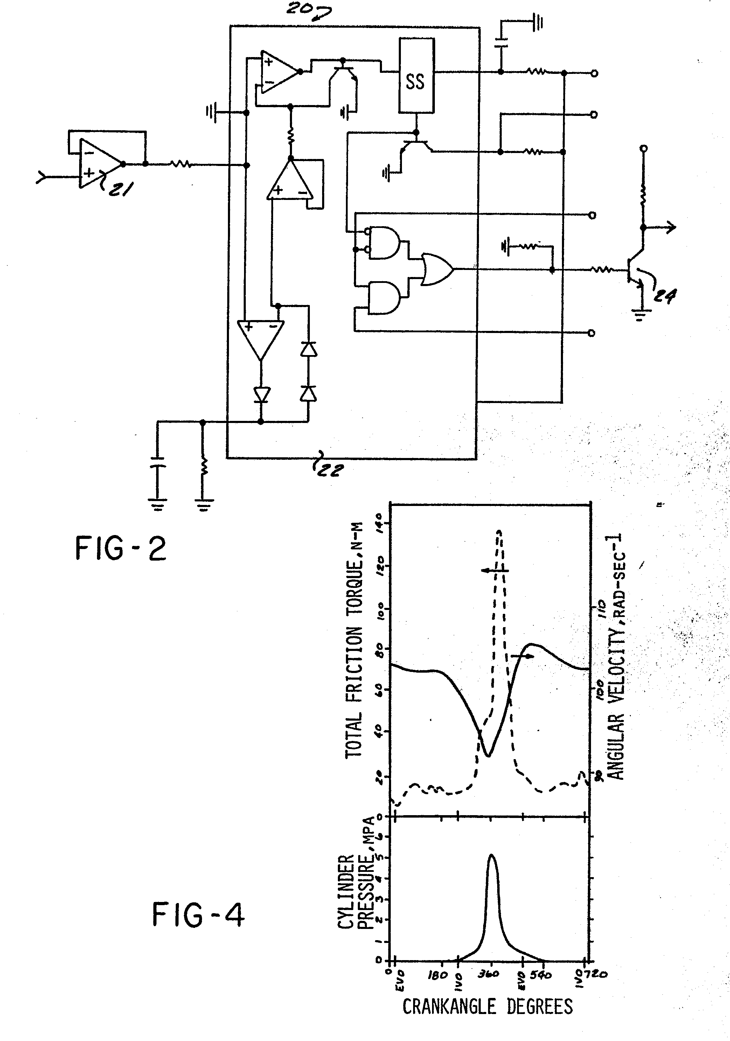

The output from the sensor 18 is input to signal conditioning circuitry, denoted in general by reference number 20 in Figure 1. The signal conditioning circuitry 20 may be of many different types and one example of such circuitry is shown in detail in Figure 2.

The signal conditioning circuitry 20 includes a first amplifier 21 which acts as a buffer to isolate signals from the sensor 18 and the remaining signal conditioning circuitry. The output from the first amplifier 21 is input to an adaptive sensing amplifier 22 which converts the pulse output from the amplifier 21 into a rectangular wave signal. The adaptive sense amplifier 22 may be any conventional sense amplifier such as the one sold commercially by National Semi-Conductor, Inc., under model number LM1815. The output from the sense amplifier 22 is input to the base electrode of a transistor 24 which acts as a buffer.

A second measuring means 26 is also mounted on the engine 12 for measuring the gas pressure in one cylinder of the engine 12. Preferably the second measuring means or sensor 26 is a pressure transducer, such as a quartz pressure transducer model number AVL 8QP500C. The output from the sensor 26 is input through an amplifier 28 to a central processing unit 30. In the preferred embodiment, the amplifier 28 is a dual mode amplifier type number 504E.

The output from the amplifier 28 is input through an analog-digital converter 29. The analog/digital converter can be any suitable type of A/D converter, such as model number AD571 sold by Analog Devices, Inc.

The central processing unit 30 may be any type of computer based device; however, a microprocessor, such as one sold by Intel Corporation under model number 8086 or model number 6502 sold by Rockwell International is preferred. The central processing unit 30 receives as inputs the outputs from the A/D converter 29 and signal conditioning circuitry 20 and communicates with a memory 32, a timer/counter 34 and a clock 36. The central processing unit 30 outputs to an indicator 38 the total instantaneous frictional torque of the engine 12 during any time in the engine operating cycle as describer hereafter.

The memory 32 is of the random access type to enable the central processing unit 32 to selectively store data therein accumulated from the first and second sensors 18 and 26, respectively, during the engine operating cycle. Such data can then be operated on by the central processing unit 30 to calculate the total instantaneous frictional torque.

The counter 34 receives output signals from the central processing unit 30 which correspond to a signal from the sensor 18 indicative of the completion of a pre-determined amount of angular rotation of the engine 12, as exemplified by the passage of one gear tooth of the flywheel 16 past the sensor 18. The counter 34 then counts clock pulses from the clock 36 at the clock frequency. In the preferred embodiment, the frequency of the clock 36 is selected with regard to the rotational speed of the engine 12 and typically could range between 0.5MHz and 20MHz.

The indicator 38 may be any type of indicator which provides a visual display of the total instantaneous frictional torque calculated by the central processing unit 30. Thus, a conventional printer, CRT display or oscilloscope may be utilized to provide a ready indication of the total instantaneous frictional torque during the operating cycle of the engine 12.

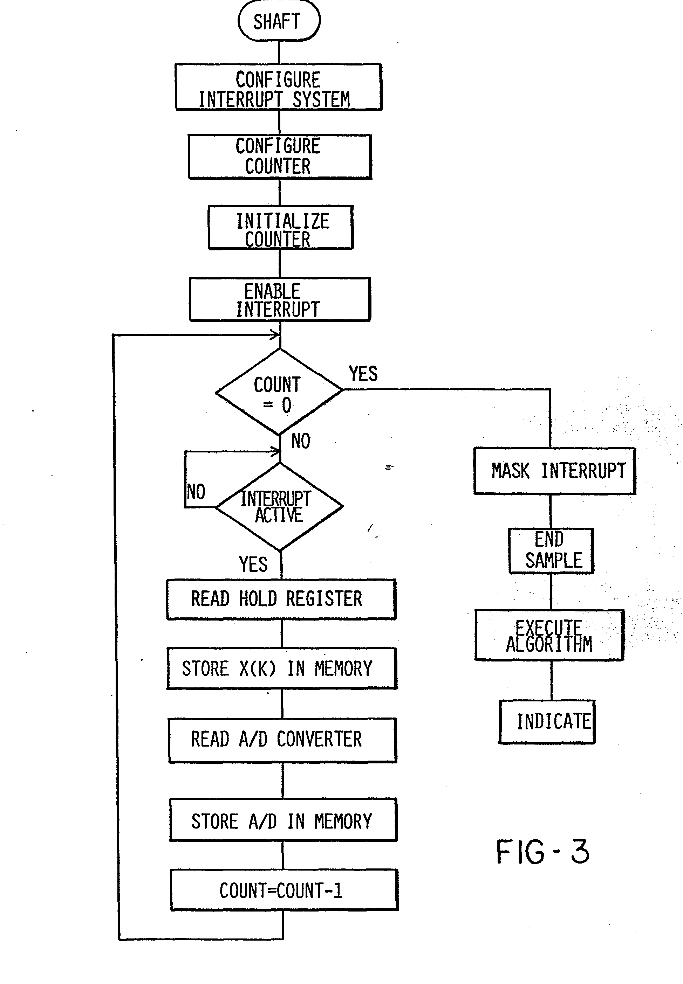

The operation of the apparatus 10 of the present invention in calculating the total instantaneous frictional torque of the engine 12 will now be explained in conjunction with Figures 3 and 4. It will be understood that other configurations may also be employed.

In calculating the total instantaneous frictional torque, the central processing unit 30 executes a program stored in the memory 32. With the engine 12 operating at zero load, i.e., idling, the central processing unit 30 executes the first stored program and initializes the interrupt routine and counter. The central processing unit 30 is initially programmed for a predetermined number of samples. For example, if the flywheel 16 has 138 gear teeth and the engine 12 is of the four stroke type requiring two revolutions to complete one engine cycle, the central processing unit 30 may be programmed to detect pulses over seven complete engine cycles for a total of 1932 separate signals. However, any sample size may be employed.

The central processing unit 30 is interrupt driven, that is, processing of data will take place upon detecting an interrupt generated by a signal from the sensor 18 indicating the passage of one gear tooth of the flywheel 16 past the sensor 18 and corresponds to a certain amount of rotation of the engine 12.

Upon receiving a first signal from the sensor 18, the central processing unit 30 will go into an interrupt mode and enable the counter 34 to count pulses from the clock 36. Upon the occurrence of the next signal from the sensor 18. This signal indicates the completion of a pre-determined amount of engine rotation as evidenced by the passage of the next gear tooth of the flywheel 16 past the sensor 18, the central processing unit 30 will process the stored count information. When the next signal is received from the sensor 18, the stored count information is transferred to an internal holding register in the counter 34 and the counter 34 is re-enabled for counting subsequent clock pulses.

The data stored in the counter 34, corresponding to the number of counted clock pulses during one pre-determined period of the engine rotation, is related to the x(k) or the transition time between two consecutive gear teeth on the flywheel 16. The central processing unit 30 reads the data in the holding register in the counter 34 and stores the data in the memory 32. At the completion of the total number of engine cycles, the central processing unit 30 will disable the interrupt and begin processing the stored data.

The stored time sequence signals correspond to the instantaneous angular velocity of the engine 12. Variations in the time signals correspond to variations in the instantaneous angular velocity of the engine 12.

The output of the A/D converter 29 is read by the central processing unit 30 while in the interrupt mode. The output of the A/D converter 29 corresponds to the cylinder pressure at the time the interrupt takes place. The central processing unit stores this value in the memory 32.

Upon completion of the pre-programmed number of engine cycles, the stored data for the cylinder pressure and to the time periods between the passage of consecutive gear teeth on the flywheel 16 past the first sensor 18 is analyzed.

The program executed by the central processing unit 30 calculates the total frictional torque according to the following equation:

$$T_F = T_G - T_{IN(rec)} - T_{IN(rot)} - T_L$$

where

| | | |
|---|---|---|
| $T_F$ | = | Total Instantaneous Frictional Torque |
| $T_G$ | = | Torque due to the gas pressure $P_G$. |
| $T_{IN(rec)}$ | = | Torque of Reciprocating Engine Components |
| $T_{IN(rot)}$ | = | Torque of Rotating Engine Components |
| $T_L$ | = | Load Torque on the Engine (is equal to zero when the engine is idling). |

The total instantaneous friction torque can be described as a function of the gas pressure, the instantaneous angular velocity of the engine and the engine design and the operating parameters by the following equation:

$$T_F (\theta) = rk[F_{gas} + \frac{mg \cos \alpha}{2}].$$

$$-rk\, F_{IN} \left( \omega, \quad \frac{\Delta \dot{\omega}^2/2}{\Delta \theta}, \quad m, \frac{r}{\ell}, \ldots \right)$$

$$-I. \quad \frac{\omega^2/2}{\Delta \theta} - T_L$$

where:

| | | |
|---|---|---|
| $r, \ell$ | = | obtained from the engine geometry |
| $I$ | = | calculated from the geometry and masses of rotating parts which consist of the flywheel, crankshaft, and part of the connecting rod. |
| $F_{gas}$ | = | calculated from the measured gas pressure $P_G$ and piston area. |
| $m$ | = | mass of the reciprocating parts which consist of the piston assembly and the reciprocating part of the connecting rod. |
| $g$ | = | gravitational acceleration. |
| $F_{IN}$ | = | inertia force of the reciprocating parts calculated from $F_{IN} = mr (K \dot{\omega} + \omega^2. \frac{dK}{d\theta})$ |
| $T_L$ | = | is the load torque. Typically all L calculations are made at no load where $T_L = 0$. |

The output of the latter equation for the total instantaneous frictional torque of the engine 12 is displayed and/or recorded in the indicator 38, as shown in Figure 4 along with the instantaneous gas pressure and the instantaneous angular velocity of the engine 12.

In order to clarify the method employed by the apparatus of the present invention in calculating the total instantaneous frictional torque in a reciprocating internal combustion engine, the following steps are performed:

1. measuring the gas pressure within the engine (P);

2. measuring the instantaneous angular velocity of the engine ($\omega$); and

3. calculating the total instantaneous frictional torque according to the equation:

$$T_F = T_G - T_{IN(rec)} - T_{IN(rot)} - T_L$$

The solution of the equation is then outputted to the indicator 38. In this manner, a unique indication of the total instantaneous frictional torque in an operating, reciprocating internal combustion engine is obtained under the $(P - \omega)$ method described above. This provides invaluable data to an engine designer which will enable him to concentrate his efforts on those frictional loss components which most adversely effect engine efficiency. Also the total instantaneous frictional torque enables the lubrication engineer to develop lubricating oils and additives which reduce friction and wear in engines.

Additional information regarding the calculation of the total instantaneous friction torque in an engine can be had by referring to a Society of Automotive Engineering technical paper number 840179 entitled "A New Approach to Evaluate the Instantaneous Friction and its Internal Components in Internal Combustion Engines", authored by Sohair F. Rezaka and Naeim A. Henein, Wayne State University, Detroit, Michigan, the

-13-

contents of which are incorporated herein by reference.

0199431

## CLAIMS

1. An apparatus for measuring the instantaneous friction in an operating, reciprocating internal combustion engine comprising:

   first means for measuring the instantaneous angular velocity of the engine;

   second means for measuring the instantaneous gas pressure within a cylinder of the engine;

   processing means, responsive to the first and second measuring means, for calculating the total instantaneous frictional torque of the engine; and

   means for indicating the calculated total instantaneous frictional torque.

2. The apparatus of Claim 1 wherein the first measuring means comprises:

   means for measuring a pre-determined amount of angular rotation of a rotatable component of the engine.

3. The apparatus of Claim 2 wherein the rotatable engine component is the engine flywheel having a plurality of circumferentially spaced gear teeth; and

   the first detecting means detects the passage of each flywheel gear teeth past the first detecting means.

4. The apparatus of Claim 1 further including stored program means for storing a program for computing the total instantaneous frictional torque of the engine.

5. A method for calculating the instantaneous total frictional torque in an operating, reciprocating, internal combustion engine comprising the steps of:

measuring the instantaneous angular velocity of the engine;

measuring the instantaneous gas pressure within a cylinder of the engine; and

calculating the total instantaneous frictional torque of the engine according to the equation:

$$T_F = T_G - T_{IN(rec)} - T_{IN(rot)} - T_L$$

Offices also at:

Hazlitt House, 28 Southampton Buildings,
Chancery Lane, London WC2A 1AT
*Telephone* London (01) 405 6093
*Fax* (Group 3/2 auto): (01) 405 0965
*Telex* 21995 SCOPO; *Telegrams* SCOPO LONDON WC2

and at:

9 Park Square, Leeds LS1 2LH
*Telephone* Leeds (0532) 444616
*Fax* (Group 3/2 auto): (0532) 444511
*Telex* 557723 HASEL; *Telegrams* SCOPO LEEDS

and at:

Motorama House 502, Rosenheimer Strasse 30,
D 8000 München 80, Germany (BRD)
*Telephone* Munich (089) 48 90 80
*Fax* (Group 3/2 auto): (089) 48 56 86
*Telex* 522936 HASMU; *Telegrams* SCOPO MUENCHEN

Patents   Trade Marks   Design Copyright

# Haseltine Lake & C(

CHARTERED PATENT AGENTS
EUROPEAN PATENT ATTORNEYS

Temple Gate House, Temple Gate,
Bristol BS1 6PT

Telephone Bristol (0272) 20197
Fax (Group 3/2 auto): (0272) 290387
Telegrams SCOPO BRISTOL
Telex 449559 LAKES

| Partners: | G.E. Kosmin | S.R. Oppem |
| --- | --- | --- |
| M.A. Bull | C.R.K. Fane | J.K. Godsill |
| R.D. Overbury | I.R. Muir | M.R. Jones |
| G.S. Bedggood | W. Silverman | M.J. Abrams |
| J.R.A.M. Cheyne | J.H. Sunderland | |
| R.L. Andrews (Consulting) | | |

Assisted in Bristol by:
J.A.C. MacFarlane   B.G. Bond

General Manager:                     A.C. Kerrid(

Please reply to.     LONDON

Date:     18th July 1986

Our Ref: HL 31748/DCO/JS

0199431

European Patent Office
Branch at The Hague
Receiving Section
P.B 5818 Patentlaan 2
2280 HV RIJSWIJK (ZH)
Netherlands

Your Ref:

For the purpose of publication, correction(s)

☒ allowed
☐ allowed with exception of the deleted points
☐ not allowed

Signature        2 2 AOUT 1986
                 Receiving Section
P. J. MASSAAR

Dear Sirs,

Re:   European Patent Application No. 86301184.7
WAYNE STATE UNIVERSITY

With reference to the EPO Form 1120 dated the 10th July 1986, I enclose, in triplicate, retyped pages 6 to 13 of the description for this application, complying with the formal requirements of the Office. The retyped pages contain a number of corrections of the description originally filed, and I hereby request that these amendments, set out below, be allowed, as corrections under Rule 88 EPC of errors in the text originally filed:-

Page 6, line 4: delete "15"; insert "14";

Page 6, line 31: delete "regular"; insert "angular";

Page 7, line 26: delete "in"; insert "is";

Page 8, line 25: delete "typicall"; insert "typically";

Page 9, line 11: delete "unity"; insert "unit";

Page 12, line 11: delete "T"; insert "$T_L$";

Page 12, line 23: delete "(   )"; insert "( $\omega$ )";

Page 13, line 1 : delete "(P-  )"; insert "(P-$\omega$)".

Cont'd...

I enclose a Form 1037, and request that it be dated and returned to me, as confirmation of receipt of this letter and its enclosures.


Yours, faithfully,


JONES, Michael Raymond

FIG -1

FIG - 2

FIG - 4

```
        ( SHAFT )
            │
   ┌─────────────────┐
   │    CONFIGURE     │
   │ INTERRUPT SYSTEM │
   └─────────────────┘
            │
   ┌─────────────────┐
   │    CONFIGURE     │
   │     COUNTER      │
   └─────────────────┘
            │
   ┌─────────────────┐
   │   INITIALIZE     │
   │     COUNTER      │
   └─────────────────┘
            │
   ┌─────────────────┐
   │     ENABLE       │
   │    INTERRUPT     │
   └─────────────────┘
            │
          ◇ COUNT      ──── YES ────┐
          ◇  = 0                     │
            │ NO                     │
            │               ┌─────────────────┐
          ◇ INTERRUPT       │  MASK INTERRUPT  │
     NO ── ◇  ACTIVE        └─────────────────┘
            │ YES                    │
   ┌─────────────────┐      ┌─────────────────┐
   │ READ HOLD REGISTER│     │      END         │
   └─────────────────┘      │    SAMPLE        │
            │               └─────────────────┘
   ┌─────────────────┐               │
   │STORE X(K) IN MEMORY│    ┌─────────────────┐
   └─────────────────┘      │    EXECUTE       │
            │               │   ALGORITHM      │
   ┌─────────────────┐      └─────────────────┘
   │ READ A/D CONVERTER│             │
   └─────────────────┘      ┌─────────────────┐
            │               │    INDICATE      │
   ┌─────────────────┐      └─────────────────┘
   │ STORE A/D IN MEMORY│
   └─────────────────┘
            │
   ┌─────────────────┐
   │  COUNT=COUNT-1   │
   └─────────────────┘
```

FIG - 3